# FASCICULE DE BREVET EUROPEEN

(11) **EP 3 204 679 B1**
(45) Date de publication et mention de la délivrance du brevet: **27.02.2019**
(21) Numéro de dépôt: 15784081.0
(22) Date de dépôt: 01.10.2015
(51) Int. Cl.: F16L 55/04, F16L 13/007, F16L 13/14

(54) **RACCORD A SERTIR SUR AU MOINS UN TUYAU, ENSEMBLE DE TUYAUX COMPRENANT UN TEL RACCORD ET PROCÉDÉ D'ASSEMBLAGE DE TUYAU A UN TEL RACCORD**
KUPPLUNG ZUR KRÄUSELUNG AUF MINDESTENS EIN ROHR, ROHRSATZ MIT SOLCH EINER KUPPLUNG UND VERFAHREN ZUR MONTAGE EINES ROHRES MIT SOLCH EINER KUPPLUNG
COUPLING TO BE CRIMPED ONTO AT LEAST ONE PIPE, SET OF PIPES INCLUDING SUCH A COUPLING, AND METHOD FOR ASSEMBLING A PIPE WITH SUCH A COUPLING

(30) Priorité: 08.10.2014 FR 1459626
(43) Date de publication de la demande: 16.08.2017
(73) Titulaire: L'Air Liquide Société Anonyme pour l'Etude et l'Exploitation des Procédés Georges Claude, 75007 Paris (FR)
(72) Inventeur: CRAYSSAC, Frédéric, F-78140 Velizy (FR); LAFLEUR, Bernard, F-42330 Saint Medard en Forez (FR); WAGNER, Marc, F-94100 Saint Maur des Fosses (FR)
(74) Mandataire: Mercey, Fiona Susan
(86) Numéro de dépôt international: PCT/FR2015/052630
(87) Numéro de publication internationale: WO 2016/055720

(56) Documents cités:
- EP-A2- 1 195 550
- DE-A1- 3 815 492
- DE-A1-102008 039 446

## Description

La présente invention concerne un raccord destiné à être raccordé fluidiquement à au moins un tuyau. De plus, la présente invention concerne un ensemble de tuyaux comprenant un tel raccord. Par ailleurs, la présente invention concerne un procédé d'assemblage d'au moins un tuyau à un tel raccord.

La présente invention s'applique notamment à l'installation d'unités de séparation d'air par cryogénie destinées à produire de l'oxygène, de l'azote et/ou de l'argon.

Une unité de séparation d'air par cryogénie est généralement livrée sous forme de plusieurs sous-ensembles qui ont été préalablement fabriqués sur un site de fabrication, puis qui doivent être assemblés les uns aux autres sur le site d'installation et de production de l'unité de séparation d'air par cryogénie.

Pour assembler ces sous-ensembles, il faut notamment raccorder des dizaines des tuyaux entre eux. Pour raccorder ces tuyaux, il est possible d'insérer des manchons de raccordement dans les tuyaux puis de solidariser ces manchons de raccordements aux tuyaux par des soudures. Mais tous ces raccordements par soudures sont difficiles et nécessitent donc des opérateurs qualifiés pour réaliser des soudures de qualité et d'autres opérateurs pour contrôler ces soudures. La réalisation et le contrôle de ces raccordements s'étalent parfois sur plusieurs mois.

Alternativement aux raccords par soudures, il est par ailleurs connu de raccorder des tuyaux entre eux au moyen de raccords par sertissage dans des domaines où les gaz ou liquides subissent des variations de températures et de pression relativement faibles.

Un raccord par sertissage de l'état de la technique antérieure comprend en général deux organes de raccordements tubulaires et deux bagues de sertissage agencées respectivement sur chaque organe de raccordement. Chaque organe de raccordement a des nervures annulaires sur sa surface interne destiné à recevoir le tuyau. Chaque bague de sertissage est déplaçable en translation par rapport à un organe de raccordement respectif.

Au cours d'un procédé d'assemblage de l'état de la technique antérieure, chaque tuyau à raccorder est introduit dans un organe de raccordement respectif, puis un outillage déplace la bague de sertissage entre une position d'introduction du tuyau dans l'organe de raccordement et une position de sertissage où la bague de sertissage sertit le tuyau sur l'organe de raccordement. Le sertissage déforme radialement les nervures annulaires et, en général, le tuyau, si bien que chaque nervure annulaire peut assurer l'étanchéité du raccord avec chaque tuyau raccordé.

Cependant, lors de la déformation radiale des nervures annulaires, des cavités sont formées entre l'organe de raccordement forme et la bague de sertissage en position de sertissage. Or chacune de ces cavités forme une enceinte close qui risque d'engendrer des problèmes de sécurité. En effet, en service, lors de l'écoulement de fluides cryogéniques, une fuite à très petit débit peut survenir depuis l'intérieur du raccord, de sorte que le fluide cryogénique emplit très lentement les cavités. Puis, lorsque la température du fluide cryogénique augmente, par exemple lors de l'arrêt de l'écoulement du fluide cryogénique dans le tuyau, la pression du fluide cryogénique présent dans les cavités risque d'augmenter très fortement. Cette très forte augmentation de pression risque de faire varier les pressions de contact exercées initialement par le sertissage à température ambiante. Par conséquent, cette très forte augmentation de pression risque de causer une perte d'étanchéité, une perte de tenue mécanique, une détérioration du raccord voire une rupture violente du raccord.

EP-A-1195550 décrit un raccord dans lequel des texturations ont une fonction d'accrochage du tube sur le raccord. Elle sont réalisées à la surface de la nervure et sur tout le périmètre de celle-ci. Les texturations sont, grâce à leurs petites dimensions, écrasées et incrustées dans le tube, lors du sertissage. Ainsi, il ne reste plus d'ouverture de communication même micro-métrique.

La présente invention vise notamment à résoudre, totalement ou partiellement, les problèmes mentionnés ci-avant.

À cet effet, l'invention a pour objet un raccord, destiné à être raccordé fluidiquement à au moins un tuyau, par exemple dans une unité de séparation d'air par cryogénie, le raccord comprenant :
- au moins un organe de raccordement ayant une forme globalement tubulaire et présentant un réceptacle pour recevoir le tuyau, ledit organe de raccordement comportant au moins une nervure de forme globalement annulaire, et
- au moins une bague de sertissage agencée sur ledit au moins organe de raccordement de façon à être déplacée entre une position d'introduction, dans laquelle le tuyau peut être introduit dans ledit au moins un réceptacle, et une position de sertissage, dans laquelle la bague de sertissage immobilise le tuyau par rapport à un organe de raccordement respectif après déformation de ladite au moins une nervure, ce raccord présente au moins un orifice d'échappement agencé de façon à relier fluidiquement au moins une cavité à l'extérieur du raccord, ladite au moins une cavité étant formée par le réceptacle et la nervure de l'organe de raccordement entre l'organe de raccordement et le tuyau en position de sertissage après déformation de ladite au moins une nervure lors de l'utilisation.

Ainsi, le ou chaque orifice d'échappement permet de préserver l'intégrité du raccord serti sur le(s) tuyau(s) raccordé(s). En effet, le ou chaque orifice d'échappement forme un passage qui permet l'écoulement de fluides, gaz ou liquides, depuis la cavité vers l'extérieur du raccord. Or l'extérieur du raccord est à une pression très inférieure aux pressions que peut générer un fluide cryogénique. En général, l'extérieur du raccord est à la pression atmosphérique, si bien que le ou chaque orifice d'échappement permet de relier la cavité à l'atmosphère.

Dans la présente demande, les verbes « raccorder », « relier », « alimenter » et leurs dérivés se rapportent à la mise en communication de fluide d'au moins deux volumes distants entre eux, pour permettre un écoulement de fluide entre ces deux volumes distants. Cet écoulement de fluide peut se faire par l'intermédiaire d'aucun, d'un ou de plusieurs composant(s), c'est-à-dire directement ou indirectement.

Dans la présente demande, le terme « tuyau » désigne tout conduit étanche adapté pour l'écoulement d'un fluide utilisé dans une installation cryogénique. Par exemple, le terme tuyau couvre un tube rigide ou un tuyau souple.

Selon un mode de réalisation de l'invention, ledit au moins un orifice d'échappement est formé par des trous qui coïncident et qui traversent respectivement ledit au moins un organe de raccordement et ladite au moins une bague de sertissage entre ladite au moins une cavité et une surface externe de ladite au moins une bague de sertissage.

Ainsi, un tel trou permet l'écoulement de fluide depuis la cavité et sur une distance limitée à l'épaisseur de la bague de sertissage, ce qui réduit les pertes de charge pour cet écoulement, donc permet un débit d'échappement du fluide relativement grand.

Selon un mode de réalisation de l'invention, ledit au moins un trou a une forme rectiligne, lesdits trous sont rectilignes, lesdits trous s'étendant de préférence perpendiculairement à la direction d'écoulement d'un fluide dans l'organe de raccordement correspondant.

Ainsi, un tel trou est relativement simple à fabriquer par exemple par perçage.

Selon un mode de réalisation de l'invention, plusieurs cavités sont formées entre l'organe de raccordement et le tuyau en position de sertissage, le raccord présentant plusieurs orifices d'échappement agencés de façon à relier fluidiquement respectivement au moins une cavité à l'extérieur du raccord.

Ainsi, les orifices d'échappement permettent de relier les cavités à l'atmosphère.

Selon une variante de l'invention, le raccord présente plusieurs trous disposés à différents emplacements selon la direction d'écoulement d'un fluide dans l'organe de raccordement correspondant. Ainsi, ces trous garantissent que la ou chaque cavité communiquera fluidiquement avec au moins un trou respectif, même si les tolérances de fabrication de la bague de sertissage et de l'organe de raccordement sont grandes.

Selon un mode de réalisation de l'invention, au moins un orifice d'échappement est formé par au moins une rainure agencée de façon à déboucher d'une part dans une cavité respective et d'autre part sur le côté de la nervure qui est opposé à la cavité respective.

La ou chaque rainure peut s'étendre perpendiculairement à une ou plusieurs nervures.

En d'autres termes, la rainure traverse la nervure respective de part en part globalement suivant la direction d'écoulement d'un fluide dans l'organe de raccordement correspondant. Ainsi, une telle nervure permet de relier la cavité à l'atmosphère.

Selon une variante de l'invention, la rainure respective peut être parallèle à la direction d'écoulement d'un fluide dans l'organe de raccordement correspondant. Selon une autre variante de l'invention, la rainure respective peut être non parallèle à la direction d'écoulement d'un fluide dans l'organe de raccordement correspondant. Par exemple, la rainure peut avoir une composante orthogonale à la direction d'écoulement d'un fluide dans l'organe de raccordement correspondant, en plus d'une composante « axiale » parallèle à la direction d'écoulement d'un fluide dans l'organe de raccordement ; une telle nervure peut par exemple être hélicoïdale.

Selon un mode de réalisation de l'invention, le raccord présente au moins deux rainures, les rainures étant réparties autour de l'organe de raccordement correspondant, de préférence uniformément réparties.

Ainsi, plusieurs rainures permettent de garantir que la ou chaque cavité sera bien reliée à l'extérieur du raccord, donc à l'atmosphère. Par exemple, le raccord peut présenter trois rainures uniformément réparties autour de l'organe de raccordement, donc définissant deux à deux des intervalles d'environ 120 degrés.

Selon un mode de réalisation de l'invention, le ou chaque organe de raccordement comprend au moins deux nervures, plusieurs cavités étant formées près de nervures respectives, chaque rainure étant agencée de façon à déboucher d'une part dans une cavité respective et d'autre part sur le côté de la nervure respective qui est opposé à la cavité respective, de sorte que les rainures permettent de canaliser du fluide depuis au moins une cavité dite amont, qui est la plus proche de l'intérieur du raccord, et une cavité dite aval, qui est la plus proche de l'extérieur du raccord.

Ainsi, plusieurs nervures permettent de maximiser l'étanchéité du raccord, ce qui permet au raccord de résister à de fortes pressions. Dans ce cas, les rainures relient les cavités entre elles et à l'atmosphère selon une configuration en série.

Selon un mode de réalisation de l'invention, au moins un orifice d'échappement a une section débitante comprise entre 1 mm² et 10 mm².

Ainsi, une telle section débitante permet de minimiser les pertes de charge générées par l'orifice d'échappement, ce qui augmente le débit d'échappement du fluide, donc limite la pression maximale que peut atteindre la ou chaque cavité.

Selon un mode de réalisation de l'invention, le réceptacle a globalement la forme d'un cylindre à base circulaire.

Ainsi, le réceptacle peut recevoir un tuyau cylindrique.

En pratique, le ou chaque organe de raccordement peut avoir un diamètre interne compris entre 4 mm, soit 1/4 de pouces, et 161 mm, soit 6 pouces.

Selon une variante de l'invention, le ou chaque organe de raccordement et la ou chaque bague de sertissage sont conformés pour réaliser une étanchéité avec le ou chaque tuyau aux gaz sous une pression inférieure à 100 bar.a, les gaz étant par exemple de l'azote, de l'oxygène, de l'argon ou d'un mélange de ces gaz.

Selon une variante de l'invention, le ou chaque organe de raccordement et la ou chaque bague de sertissage sont conformés pour réaliser une étanchéité avec le ou chaque tuyau aux liquides sous une pression inférieure à 100 bar.a, les liquides étant par exemple de l'azote, de l'oxygène, de l'argon ou d'un mélange de ces gaz.

Selon un mode de réalisation de l'invention, le raccord comprend en outre au moins un organe de butée agencé pour arrêter une bague de sertissage respective en position de sertissage.

Ainsi, un tel organe de butée permet de positionner avec précision le tuyau sur le raccord en vue du sertissage.

Selon une variante de l'invention, les organes de raccordement, le corps intermédiaire et les bagues de sertissage sont conformés pour réaliser une étanchéité aux gaz et aux liquides avec un taux de fuite maximal de 10⁻³ mbar.L/s (millibar.litre/seconde). En pratique, seule la nervure la plus proche de l'organe de butée est vraiment étanche. Les autres nervures ne sont pas absolument étanches, puisqu'elles sont traversées ou drainées par les orifices d'échappement. Donc des quantités très faibles de fluides cryogéniques peuvent fuir à l'atmosphère, ce qui n'a pas de conséquence négative dans une installation cryogénique.

Selon un mode de réalisation de l'invention, le raccord comprend deux organes de raccordements et deux bagues de sertissage, le raccord comprenant en outre un corps intermédiaire solidarisant les organes de raccordements entre eux.

Ainsi, un tel organe de raccordement permet de réaliser un ensemble de tuyaux comprenant au moins deux tuyaux, par exemple pour équiper une unité de séparation d'air par cryogénie.

Alternativement au mode de réalisation précédent, le raccord peut comprendre un seul organe de raccordement qui est adapté pour recevoir un tuyau, le raccord étant par ailleurs conformé pour être fixé à un composant fluidique autre qu'un tuyau, tel qu'un bloc collecteur ou un bloc manifold. Dans cette alternative, un seul tuyau est raccordé et serti au raccord. Ainsi, le raccord permet de raccorder de manière étanche ce tuyau unique au composant fluidique.

Selon une autre variante, le raccord peut comprendre plus de deux organes de raccordement, par exemple trois ou quatre, adaptés pour recevoir autant de tuyaux. Ainsi, le raccord peut former un té ou une croix.

Selon une autre variante, au moins un organe de raccordement a une forme globalement tubulaire et rectiligne. En d'autres termes, l'organe de raccordement est formé par un cylindre dont l'axe est rectiligne. Dans cette variante, le déplacement de chaque bague de sertissage, pour le sertissage, se fait suivant une translation rectiligne.

Alternativement, au moins un organe de raccordement a une forme globalement tubulaire et incurvé. En d'autres termes, l'organe de raccordement est formé par un cylindre dont l'axe est curviligne. Ainsi, le racccord peut former un coude incurvé, par exemple à 90 degrés. Dans cette variante, le déplacement de chaque bague de sertissage, pour le sertissage, se fait suivant une translation curviligne.

Par ailleurs, la présente invention a pour objet un ensemble de tuyaux, par exemple pour une unité de séparation d'air par cryogénie, comprenant au moins deux tuyaux, ledit ensemble de tuyaux étant caractérisé en ce qu'il comprend en outre un raccord selon l'invention, ledit raccord étant raccordé auxdits au moins deux tuyaux.

Ainsi, un tel ensemble de tuyaux évite de recourir à une soudure pour assembler deux tuyaux ou plus, ce qui permet par exemple d'assembler une unité de séparation d'air par cryogénie plus rapidement et plus simplement qu'avec un ensemble de tuyaux selon l'état de la technique antérieure. De plus, un tel ensemble de tuyaux permet de relier chaque cavité à l'atmosphère.

Selon un mode de réalisation de l'invention, le raccord est composé de matériau(x) sélectionné(s) dans le groupe constitué d'acier au carbone, d'acier inoxydable et d'alliage d'aluminium, et lesdits au moins deux tuyaux sont composés de matériaux sélectionnés dans le groupe constitué d'acier au carbone, d'acier inoxydable et d'alliage d'aluminium, les matériaux pouvant être différents.

Ainsi, de tels matériaux sont compatibles avec les contraintes mécaniques et chimiques subies par une unité de séparation d'air par cryogénie.

De plus, la présente invention a pour objet un procédé d'assemblage d'au moins un tuyau à un raccord selon l'invention, par exemple pour une unité de séparation d'air par cryogénie, comprenant les étapes :
- introduire ledit au moins un tuyau dans ledit au moins un organe de raccordement, et
- déplacer ladite au moins une bague de sertissage de la position d'introduction à la position de sertissage de façon à raccorder le raccord avec ledit au moins un tuyau, de sorte que ledit au moins un orifice d'échappement relie fluidiquement ladite au moins une cavité à l'extérieur du raccord.

Ainsi, un tel procédé d'assemblage évite de recourir à une soudure pour assembler deux tuyaux ou plus, ce qui permet par exemple d'assembler une unité de séparation d'air par cryogénie plus rapidement et plus simplement qu'avec un ensemble de tuyaux selon l'état de la technique antérieure.

Les modes de réalisation et les variantes mentionnés ci-avant peuvent être pris isolément ou selon toute combinaison techniquement admissible.

La présente invention sera bien comprise et ses avantages ressortiront aussi à la lumière de la description qui va suivre, donnée uniquement à titre d'exemple non limitatif et faite en référence aux dessins annexés, dans lesquels :
- la figure 1 est une vue schématique en perspective, tronquée par deux plans perpendiculaires, d'une partie d'un ensemble de tuyaux conforme à un premier mode de réalisation de l'invention et comprenant un raccord conforme à un premier mode de réalisation ;
- la figure 2 est une vue similaire à la figure 1 illustrant une partie d'un ensemble de tuyaux conforme à un deuxième mode de réalisation de l'invention et comprenant un raccord conforme à un deuxième mode de réalisation ;
- la figure 3 est une vue similaire à la figure 1 illustrant une partie d'un ensemble de tuyaux conforme à un troisième mode de réalisation de l'invention et comprenant un raccord conforme à un troisième mode de réalisation ;
- la figure 4 est une vue schématique en perspective illustrant une étape initiale d'un procédé d'assemblage conforme à l'invention, dans laquelle l'ensemble de tuyaux de la figure 1 présente son raccord dans une position d'introduction ;
- la figure 5 est une vue schématique en perspective illustrant une étape intermédiaire du procédé d'assemblage conforme à l'invention, dans laquelle un outillage sertit le raccord et les tuyaux de l'ensemble de tuyaux de la figure 4 ; et
- la figure 6 est une vue schématique en perspective illustrant une étape finale du procédé d'assemblage, dans laquelle le raccord de l'ensemble de tuyaux de la figure 4 se trouve en position de sertissage.

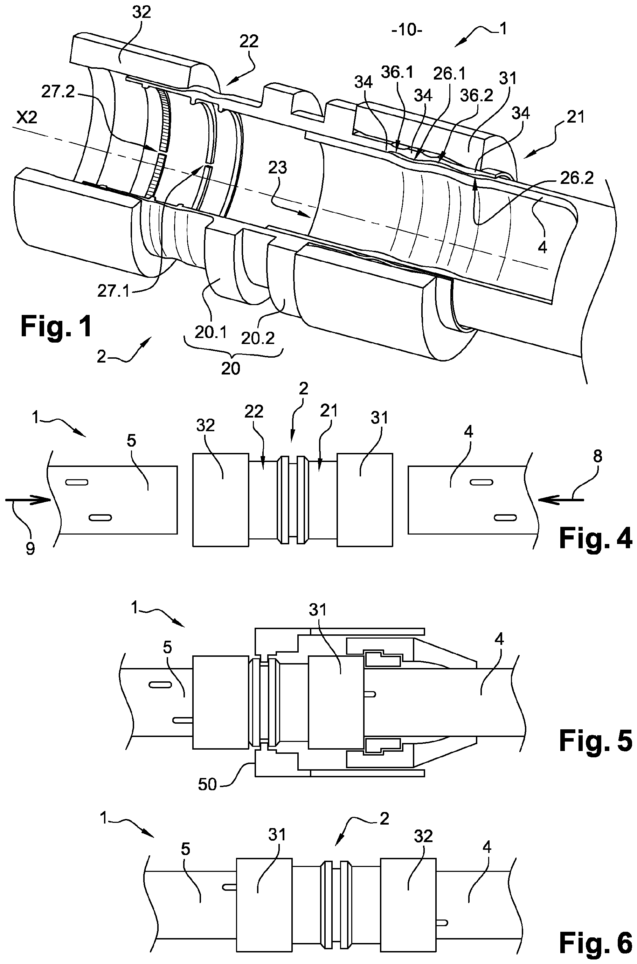

La figure 1 illustre un ensemble de tuyaux 1 comprenant un raccord 2 et deux tuyaux 4 et 5. Le tuyau 4 est partiellement visible à la figure 1 et le tuyau 5 est partiellement visible aux figures 4, 5 et 6. L'ensemble de tuyaux 1 est destiné à équiper une unité de séparation d'air par cryogénie.

Le raccord 2 comprend deux organes de raccordement 21 et 22 et deux bagues de sertissage 31 et 32 qui sont agencées respectivement sur l'organe de raccordement 21 et sur l'organe de raccordement 22, de façon à être déplacée respectivement par rapport à l'organe de raccordement 21 ou 22.

Dans l'exemple de la figure 1, les bagues de sertissage 31 et 32 sont déplacées parallèlement à une direction axiale X2. La direction axiale X2 correspond à l'axe du tuyau 4 ou 5 lorsque l'ensemble de tuyaux 1 est à l'état assemblé. La direction axiale X2 correspond à la direction d'écoulement d'un fluide dans l'organe de raccordement 21 ou 22 lorsque l'ensemble de tuyaux 1 est en service.

Le raccord 2 comprend en outre un corps intermédiaire 20 qui est disposé entre les organes de raccordement 21 et 22 et qui a une forme globalement annulaire. Le corps intermédiaire 20 solidarise les organes de raccordements 21 et 22 entre eux. Les organes de raccordement 21 et 22 sont ici disposés symétriquement par rapport au corps intermédiaire 20. De même, les bagues de sertissage 31 et 32 sont ici disposées symétriquement par rapport au corps intermédiaire 20.

De plus, le raccord 2 comprend deux organes de butée 20.1 et 20.2 qui sont agencés pour arrêter respectivement les bagues de sertissage 31 et 32 en position de sertissage. En l'occurrence, les organes de butée 20.1 et 20.2 sont formés par des surfaces annulaires axiales ménagées sur le corps intermédiaire 20.

Dans l'exemple de la figure 1, l'organe de raccordement 21 est identique à l'organe de raccordement 22 et la bague de sertissage 31 est identique à la bague de sertissage 32. Par conséquent, seul l'organe de raccordement 21 et la bague de sertissage 31 sont décrits en détail ci-après. La description de l'organe de raccordement 21 et de la bague de sertissage 31 peut être transposée respectivement à l'organe de raccordement 22 et la bague de sertissage 32.

Comme le montre la figure 1, l'organe de raccordement 21 a une forme globalement tubulaire et il présente un réceptacle 23 pour recevoir le tuyau 4. Le réceptacle 23 est ici une surface radialement interne par rapport à la direction axiale X2. Le réceptacle 23 a globalement la forme d'un cylindre à base circulaire, qui est ici généré autour de la direction axiale X2. Dans l'exemple de la figure 1, l'organe de raccordement 21 a un réceptacle 23 dont le diamètre interne est d'environ 60 mm.

Par ailleurs, l'organe de raccordement 21 comporte trois nervures 34 de forme globalement annulaire autour de la direction axiale X2. Dans l'exemple de la figure 1, les nervures 34 sont disposées sur une surface radialement interne, par rapport à la direction axiale X2, de l'organe de raccordement 21.

La bague de sertissage 31 est déplaçable au moins en translation par rapport à l'organe de raccordement 21 et parallèlement à la direction axiale X2 entre :
- une position d'introduction (non représentée), dans laquelle le tuyau 4 peut être introduit dans l'organe de raccordement 21, et
- une position de sertissage, dans laquelle la bague de sertissage 32 immobilise le tuyau 4 par rapport à l'organe de raccordement 21 après déformation des nervures 34 et du tuyau 4.

La bague de sertissage 32 est quant à elle représentée en position d'introduction et pas en position de sertissage, car l'organe de raccordement 22 ne reçoit pas encore de tuyau.

Deux cavités 36.1 et 36.2 sont formées entre l'organe de raccordement 21 et le tuyau 4 en position de sertissage (figure 1). Les cavités 36.1 et 36.2 ont, en section dans le plan de la figure 1, une forme oblongue qui s'étend parallèlement à la direction axiale X2. Les cavités 36.1 et 36.2 sont formées respectivement près des nervures 34. Comme les nervures 34 sont de formes globalement annulaires, les cavités 36.1 et 36.2 ont aussi des formes globalement annulaires générées autour de la direction axiale X2 à base de la section oblongue.

De plus, le raccord 2 présente plusieurs orifices d'échappement qui sont agencés de façon à relier fluidiquement les cavités 36.1 et 36.2 à l'extérieur 10 du raccord 2. Dans l'exemple de la figure 1, les orifices d'échappement sont formés par des rainures, dont deux sont visibles à la figure 1 avec les références 26.1 et 26.2.

La rainure 26.1 est agencée de façon à déboucher d'une part dans la cavité 36.1 et d'autre part sur le côté de la nervure 34 qui est opposé à la cavité 36.1. De manière similaire, la rainure 26.2 est agencée de façon à déboucher d'une part dans la cavité 36.2 et d'autre part sur le côté de la nervure 34 qui est opposé à la cavité 36.2. Chaque rainure 26.1 ou 26.2 a ici une section débitante d'environ 3 mm².

En d'autres termes, les rainures 26.1 et 26.2 traversent respectivement deux nervures 34 de part en part suivant la direction axiale X2. Chaque rainure 26.1 ou 26.2 est ici parallèle à la direction axiale X2. Chaque rainure 26.1 ou 26.2 permet de canaliser du fluide depuis la cavité amont 36.1, qui est la plus proche de l'intérieur du raccord 2, et la cavité aval 36.2, qui est la plus proche de l'extérieur 10 du raccord 2. En d'autres termes, la cavité amont 36.1 et la cavité aval 36.2 sont reliées fluidiquement en série par les rainures 26.1 et 26.2.

Le raccord 2 présente des rainures 27.1 et 27.2 qui sont ici réparties uniformément autour de l'organe de raccordement 22 et autour de la direction axiale X2. Ces rainures 27.1 et 27.2 sont respectivement semblables aux rainures 26.1 et 26.2.

Les organes de raccordement 21 et 22, le corps intermédiaire 20, le tuyau et les bagues de sertissage 31 et 32 sont conformés pour réaliser une étanchéité aux gaz et aux liquides avec un taux de fuite maximal de 10⁻³ mbar.L/s (millibar.litre/seconde). En pratique, seule la nervure 34 la plus proche de l'organe de butée 20.1, pour l'organe de raccordement 21, est vraiment étanche. Les autres nervures 34 ne sont pas absolument étanches, puisqu'elles sont traversées par les rainures 26.1 et 26.2. Donc des quantités très faibles de fluides cryogéniques peuvent fuir à l'atmosphère, ce qui n'a pas de conséquence négative dans une installation cryogénique.

En service, chaque orifice d'échappement formé par une rainure 26.1 ou 26.2 définit un passage qui permet l'écoulement de fluides depuis une cavité respective 34 vers l'extérieur 10 du raccord 2 qui est à la pression atmosphérique. En d'autres termes, les rainures 26.1 ou 26.2 permettent de relier les cavités 34 à l'atmosphère. De même, les rainures 27.1 et 27.2 permettent de relier les cavités correspondantes à l'atmosphère.

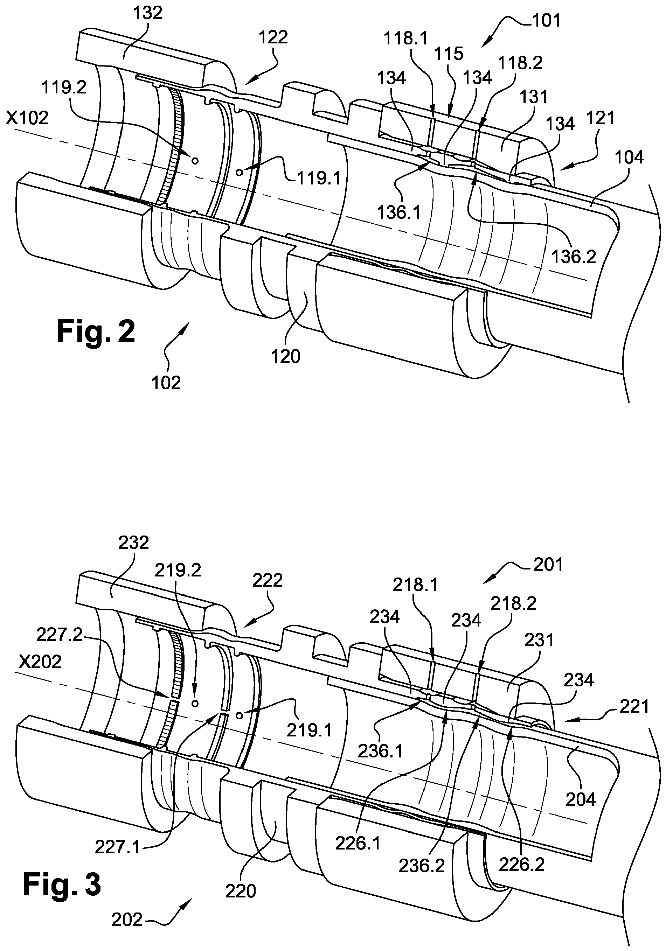

La figure 2 illustre un ensemble de tuyaux 101 et un raccord 102 conformes à un deuxième mode de réalisation de l'invention. Dans la mesure où l'ensemble de tuyaux 101 et le raccord 102 sont similaires respectivement à l'ensemble de tuyaux 1 et au raccord 2, la description de l'ensemble de tuyaux 1 et du raccord 2 donnée ci-avant en relation avec la figure 1 peut être transposée à l'ensemble de tuyaux 101 et au raccord 102, à l'exception des différences notables énoncées ci-après.

Un composant de l'ensemble de tuyaux 101 ou du raccord 102 identique ou correspondant, par sa structure ou par sa fonction, à un composant de l'ensemble de tuyaux 1 ou du raccord 2 porte la même référence numérique augmentée de 100. On définit ainsi une direction axiale X102, un tuyau 104, un corps intermédiaire 120, deux organes de raccordement 121 et 122, deux bagues de sertissage 131 et 132, trois nervures 134 et des cavités 136.1 et 136.2.

Le raccord 102 diffère du raccord 2, car, au lieu des rainures 26.1 et 26.2, les orifices d'échappement sont formés par plusieurs trous 118.1 et 118.2 et équivalents non représentés, qui coïncident et qui traversent respectivement l'organe de raccordement 121 ou 122 et la bague de sertissage 131 ou 132 entre chaque cavité 134 et une surface externe 115 de la bague de sertissage 131 ou 132. Les trous 118.1 et 118.2 permettent de relier respectivement les cavités 134 à l'atmosphère.

Le raccord 102 présente aussi des trous 119.1 et 119.2 et équivalents qui sont ici répartis uniformément autour de l'organe de raccordement 121 et de la direction axiale X102. Ces trous 119.1 et 119.2 et équivalents sont respectivement semblables aux trous 118.1 et 118.2. Les trous 119.1 et 119.2 permettent de relier des cavités correspondantes à l'atmosphère.

Chaque trou 118.1 ou 118.2 ou équivalent a ici une forme rectiligne et s'étend perpendiculairement à la direction axiale X102. En d'autres termes, chaque trou 118.1 ou 118.2 ou équivalent s'étend suivant une direction radiale.

Selon une variante non représentée de l'invention, le raccord peut présenter plusieurs trous disposés à différents emplacements selon la direction axiale.

La figure 3 illustre un ensemble de tuyaux 201 et un raccord 202 conformes à un troisième mode de réalisation de l'invention. Dans la mesure où l'ensemble de tuyaux 201 et le raccord 202 sont similaires respectivement à l'ensemble de tuyaux 1 et au raccord 2 et à l'ensemble de tuyaux 101 et au raccord 102, la description de l'ensemble de tuyaux 1 et du raccord 2 donnée ci-avant en relation avec la figure 1 peut être transposée à l'ensemble de tuyaux 201 et au raccord 202, à l'exception des différences notables énoncées ci-après.

Un composant de l'ensemble de tuyaux 201 ou du raccord 202 identique ou correspondant, par sa structure ou par sa fonction, à un composant de l'ensemble de tuyaux 1 ou du raccord 2 porte la même référence numérique augmentée de 200. On définit ainsi une direction axiale X202, un tuyau 204, un corps intermédiaire 220, deux organes de raccordement 221 et 222, deux bagues de sertissage 231 et 232, trois nervures 234, des rainures 226.1 et 226.2, des rainures 227.1 et 227.2, des trous 218.1 et 218.2, des trous 219.1 et 219.2 et des cavités 236.1 et 236.2.

Le raccord 202 diffère légèrement du raccord 2, car, outre des rainures 226.1 et 226.2, 227.1 et 227.2 et équivalents, les orifices d'échappement sont aussi formés par des trous 218.1 et 218.2, 219.1 et 219.2 et équivalents. En d'autres termes, le raccord 202 est une combinaison des raccords 2 et 102.

Les figures 4, 5 et 6 illustrent respectivement une étape initiale, une étape intermédiaire et une étape finale d'un procédé d'assemblage conforme à l'invention pour construire l'ensemble de tuyaux 1 de la figure 1.

Le procédé d'assemblage permet d'assembler des tuyaux 4 et 5 au raccord 2. Le procédé d'assemblage comprend les étapes :
- introduire les tuyaux 4 et 5 respectivement dans les organes de raccordement 21 et 22, dans le sens des flèches 8 et 9 à la figure 4, et
- déplacer les bagues de sertissage 31 et 32 de la position d'introduction (figure 4) à la position de sertissage (figure 6) de façon à raccorder le raccord 2 avec les tuyaux 4 et 5, de sorte que les orifices d'échappement 26.1 et 26.2 (voir figure 1) relient fluidiquement les cavités 34 (voir figure 1) à l'extérieur 10 du raccord 2.

Pour opérer l'étape de déplacement de chaque bague de sertissage 31 ou 32, on peut utiliser des mors 50 pilotés par un outillage hydraulique, électrique ou manuel commandé ou manipulé par un opérateur non représenté. Les mors 50 ont pour fonction de sertir les bagues de sertissage 31 et 32 sur le raccord 2, en déformant radialement les organes de raccordement 21 et 22 ainsi que les tuyaux 4 et 5.

Après avoir réalisé le procédé d'assemblage, l'ensemble de tuyaux 1 comprend deux tuyaux 4 et 5 et le raccord 2 qui est raccordé aux tuyaux 4 et 5 de manière étanche par sertissage. Dans l'exemple des figures 1 et 4 à 6, le raccord 2 est composé d'acier inoxydable et les tuyaux 4 et 5 sont aussi composés d'acier inoxydable.

Bien entendu, l'invention n'est pas limitée aux exemples particuliers décrits et illustrés dans la présente demande. D'autres variantes ou modes de réalisation à la portée de l'homme du métier peuvent aussi être envisagés sans sortir du cadre de l'invention définie par les revendications ci-après.

Par exemple, alternativement aux modes de réalisation décrits ci-avant, le raccord peut comprendre un seul organe de raccordement adapté pour recevoir un tuyau, le raccord étant par ailleurs conformé pour être fixé à un composant fluidique autre qu'un tuyau, tel qu'un bloc collecteur ou un bloc manifold. Dans cette alternative, un seul tuyau est raccordé et serti au raccord. Ainsi, le raccord permet de raccorder de manière étanche ce tuyau unique au composant fluidique.

Bien entendu, l'invention n'est pas limitée aux exemples particuliers décrits dans la présente demande. D'autres modes de réalisation à la portée de l'homme du métier peuvent aussi être envisagées sans sortir du cadre de l'invention définie par les revendications ci-après.

Selon une variante, le raccord peut avoir une forme tubulaire incurvée, au lieu d'être rectiligne comme les raccords 2, 102 et 202. Dans ce cas, la direction axiale est définie par une courbe, par exemple un coude à 90 degrés. Dans une telle variante, le déplacement de chaque bague de sertissage se fait en translation curviligne.

## Revendications

1. **Raccord** (2; 102; 202), destiné à être raccordé fluidiquement à au moins un tuyau (4, 5), par exemple dans une unité de séparation d'air par cryogénie, le raccord (2; 102; 202) comprenant :
- au moins un organe de raccordement (21, 22; 121, 122; 221, 222) ayant une forme globalement tubulaire et présentant un réceptacle (23) pour recevoir le tuyau (4, 5), ledit organe de raccordement (21, 22) comportant au moins une nervure (34 ; 134 ; 234) de forme globalement annulaire, et
- au moins une bagué de sertissage (31, 32; 131, 132; 231, 232) agencée sur ledit au moins organe de raccordement (21, 22) de façon à être déplacée entre une position d'introduction, dans laquelle le tuyau (4, 5) peut être introduit dans ledit au moins un réceptacle (23), et une position de sertissage, dans laquelle la bague de sertissage (31, 32) immobilise le tuyau (4, 5) par rapport à un organe de raccordement respectif (21, 22) après déformation de ladite au moins une nervure (34; 134; 234), le raccord (2; 102; 202) étant **caractérisé en ce qu'**il présente au moins un orifice d'échappement agencé de façon à relier fluidiquement au moins une cavité à l'extérieur (10) du raccord (2; 102 ; 202) et **en ce que** le réceptacle et l'au moins une nervure permettent la formation de ladite cavité (36.1, 36.2) entre l'organe de raccordement (21, 22) et le tuyau en position de sertissage après déformation de ladite au moins une nervure lors de l'utilisation.

2. Raccord (102; 202) selon la revendication 1, dans lequel ledit au moins un orifice d'échappement est formé par des trous (118.1, 118.2 ; 218.1, 218.2) qui coïncident et qui traversent respectivement ledit au moins un organe de raccordement (121, 122; 221, 222) et ladite au moins une bague de sertissage (131, 132; 231, 232) entre ladite au moins une cavité (36.1,36.2) et une surface externe (115) de ladite au moins une bague de sertissage (131, 132; 231, 232).

3. Raccord (2; 102 ; 202) selon la revendication 2, dans lequel lesdits trous (118.1, 118.2 ; 218.1, 218.2) sont rectilignes, lesdits trous (118.1, 118.2 ; 218.1, 218.2) s'étendant de préférence perpendiculairement à la direction d'écoulement d'un fluide dans l'organe de raccordement correspondant (21, 22; 121, 122; 221, 222).

4. Raccord (2; 102; 202) selon l'une quelconque des revendications précédentes, dans lequel plusieurs cavités (36.1,36.24) sont formées entre l'organe de raccordement (21, 22; 121, 122; 221, 222) et le tuyau (42) en position de sertissage, le raccord (2; 102.; 202) présentant plusieurs orifices d'échappement agencés de façon à relier fluidiquement respectivement au moins une des cavités à l'extérieur (10) du raccord (2; 102 ; 202).

5. Raccord (2; 202) selon l'une quelconque des revendications précédentes, dans lequel ledit au moins un orifice d'échappement est formé par au moins une rainure (26.1, 26.2 ; 226.1, 226.2) agencée de façon à déboucher d'une part dans une cavité (36.1,36.2) respective et d'autre part sur le côté de la nervure (34 ; 234) qui est opposé à la cavité respective, la ou chaque rainure s'étendant de préférence perpendiculairement à une ou plusieurs nervures.

6. Raccord (2; 202) selon les revendications 4 et 5, dans lequel le raccord (2 ; 202) présente au moins deux rainures (26.1, 26.2 ; 226.1, 226.2), les rainures (26.1, 26.2; 226.1, 226.2) étant réparties autour de l'organe de raccordement correspondant (21, 22; 121, 122; 221, 222), de préférence uniformément réparties.

7. Raccord (2; 202) selon la revendication 5 ou 6, dans lequel le ou chaque organe de raccordement (21, 22 ; 221, 222) comprend au moins deux nervures (34 ; 234), plusieurs cavités (36.1,36.2) étant formées près de nervures respectives (34 ; 234), chaque rainure (26.1, 26.2 ; 226.1, 226.2) étant agencée de façon à déboucher d'une part dans une cavité respective et d'autre part sur le côté de la nervure (34 ; 234) respective qui est opposé à la cavité respective, de sorte que les rainures (26.1, 26.2 ; 226.1, 226.2) permettent de canaliser du fluide depuis au moins une cavité dite amont, qui est la plus proche de l'intérieur du raccord (2 ; 202), et une cavité dite aval, qui est la plus proche de l'extérieur (10) du raccord (2 ; 202).

8. Raccord (2 ; 102 ; 202) selon l'une quelconque des revendications précédentes, dans lequel ledit au moins un orifice d'échappement a une section débitante comprise entre 1 mm² et 10 mm².

9. Raccord (2 ; 102 ; 202) selon l'une quelconque des revendications précédentes, dans lequel le réceptacle (23) a globalement la forme d'un cylindre à base circulaire.

10. Raccord (2; 102; 202) selon l'une quelconque des revendications précédentes, comprenant en outre au moins un organe de butée (20.1 ; 20.2) agencé pour arrêter une bague de sertissage respective (31, 32 ; 131, 132 ; 231, 232) en position de sertissage.

11. Raccord (2; 102; 202) selon l'une quelconque des revendications précédentes, comprenant deux organes de raccordement (21, 22; 121, 122; 221, 222) et deux bagues de sertissage (31, 32; 131, 132; 231, 232), le raccord (2; 102; 202) comprenant en outre un corps intermédiaire (20; 120; 220) solidarisant les organes de raccordement (21, 22 ; 121, 122 ; 221, 222) entre eux.

12. Ensemble de tuyaux (1 ; 101 ; 201), par exemple pour une unité de séparation d'air par cryogénie, comprenant au moins deux tuyaux (4, 5), ledit ensemble de tuyaux (1 ; 101 ; 201) étant **caractérisé en ce qu'**il comprend en outre un raccord (2 ; 102 ; 202) selon la revendication 11, ledit raccord (2 ; 102 ; 202) étant raccordé auxdits au moins deux tuyaux (4, 5).

13. Ensemble de tuyaux (1 ; 101 ; 201) selon la revendication 12, dans lequel le raccord (2 ; 102 ; 202) est composé de matériau(x) sélectionné(s) dans le groupe constitué d'acier au carbone, d'acier inoxydable et d'alliage d'aluminium, et dans lequel lesdits au moins deux tuyaux (4, 5) sont composés de matériaux sélectionnés dans le groupe constitué d'acier au carbone, d'acier inoxydable et d'alliage d'aluminium, les matériaux pouvant être différents.

14. Procédé d'assemblage d'au moins un tuyau (4, 5) à un raccord (2; 102; 202) selon l'une quelconque des revendications 1 à 11, par exemple pour une unité de séparation d'air par cryogénie, comprenant les étapes :
- introduire ledit au moins un tuyau (4, 5) dans ledit au moins un organe de raccordement (21, 22 ; 121, 122 ; 221, 222), et
- déplacer ladite au moins une bague de sertissage (31, 32 ; 131, 132 ; 231, 232) de la position d'introduction à la position de sertissage de façon à raccorder le raccord (2; 102; 202) avec ledit au moins un tuyau (4, 5), de sorte que ledit au moins un orifice d'échappement relie fluidiquement ladite au moins une cavité (36.1,36.2) à l'extérieur du raccord (2 ; 102 ; 202).

## Patentansprüche

1. Anschluss (2; 102; 202), der dazu bestimmt ist, fluidisch an mindestens ein Rohr (4, 5), beispielsweise in einer Luftzerlegungseinheit durch Kryotechnik, angeschlossen zu werden, wobei der Anschluss (2; 102; 202) umfasst:
- mindestens ein Anschlussorgan (21, 22; 121, 122; 221, 222), das eine im Allgemeinen röhrenförmige Form aufweist und einen Behälter (23) vorweist, um das Rohr (4, 5) aufzunehmen, wobei das Anschlussorgan (21, 22) mindestens eine Rippe (34; 134; 234) in einer im Allgemeinen ringförmigen Form umfasst, und
- mindestens einen Bördelring (31, 32; 131, 132; 231, 232), der derart an dem mindestens einen Anschlussorgan (21, 22) angeordnet ist, um zwischen einer Einführposition, in der das Rohr (4, 5) in den mindestens einen Behälter (23) eingeführt werden kann, und einer Bördelposition, in der der Bördelring (31, 32) das Rohr (4, 5) im Verhältnis zu einem jeweiligen Anschlussorgan (21, 22) nach Verformung der mindestens einen Rippe (34; 134; 234) gehalten wird, verschoben zu werden, wobei der Anschluss (2; 102; 202) **dadurch gekennzeichnet ist, dass** er mindestens eine Abluftöffnung vorweist, die in der Art angeordnet ist, um mindestens einen Hohlraum mit der Außenseite (10) des Anschlusses (2; 102; 202) zu verbinden, und dadurch, dass der Behälter und die mindestens eine Rippe bei der Verwendung die Bildung des mindestens einen Hohlraums (36.1, 36.2) zwischen dem Anschlussorgan (21, 22) und dem Rohr in der Bördelposition nach Verformung der mindestens einen Rippe ermöglichen.

2. Anschluss (102; 202) nach Anspruch 1, wobei die mindestens eine Abluftöffnung durch Löcher (118.1, 118.2; 218.1, 218.2) gebildet wird, die übereinstimmen und die jeweils das mindestens eine Anschlussorgan (121, 122; 221, 222) und den mindestens einen Bördelring (131, 132; 231, 232) zwischen dem mindestens einen Hohlraum (36.1, 36.2) und einer externen Oberfläche (115) des mindestens einen Bördelrings (131, 132; 231, 232) durchqueren.

3. Anschluss (2; 102; 202) nach Anspruch 2, wobei die Löcher (118.1, 118.2; 218.1, 218.2) geradlinig sind, wobei sich die Löcher (118.1, 118.2; 218.1, 218.2) vorzugsweise senkrecht zu der Strömungsrichtung eines Fluids in dem entsprechenden Anschlussorgan (21, 22; 121, 122; 221, 222) erstrecken.

4. Anschluss (2; 102; 202) nach einem der vorstehenden Ansprüche, wobei mehrere Hohlräume (36.1, 36.24) zwischen dem Anschlussorgan (21, 22; 121, 122; 221, 222) und dem Rohr (42) in Bördelposition gebildet werden, wobei der Anschluss (2; 102; 202) mehrere Abluftöffnungen vorweist, die derart angeordnet sind, um jeweils mindestens einen der Hohlräume fluidisch mit der Außenseite (10) des Anschlusses (2; 102; 202) zu verbinden.

5. Anschluss (2; 202) nach einem der vorstehenden Ansprüche, wobei die mindestens eine Abluftöffnung durch mindestens eine Nut (26.1, 26.2; 226.1, 226.2) gebildet wird, die derart angeordnet ist, um einerseits in einen jeweiligen Hohlraum (36.1, 36.2), und andererseits in die Seite der Rippe (34; 234) zu münden, die gegenüber dem jeweiligen Hohlraum liegt, wobei sich die oder jede Rippe vorzugsweise senkrecht zu einer oder mehreren Rippen erstreckt.

6. Anschluss (2; 202) nach den Ansprüchen 4 und 5, wobei der Anschluss (2; 202) mindestens zwei Nuten (26.1, 26.2; 226.1, 226.2) vorweist, wobei die Nuten (26.1, 26.2; 226.1, 226.2) um das entsprechende Anschlussorgan (21, 22; 121, 122; 221, 222) herum verteilt sind, vorzugsweise gleichförmig verteilt sind.

7. Anschluss (2; 202) nach 5 und 6, wobei das oder jedes Anschlussorgan (21, 22; 221, 222) mindestens zwei Rippen (34; 234) umfasst, mehrere Hohlräume (36.1, 36.2) nahe an jeweiligen Rippen (34; 234) gebildet werden, wobei jede Nut (26.1, 26.2; 226.1, 226.2) derart angeordnet ist, um einerseits in einen jeweiligen Hohlraum und andererseits in die Seite der jeweiligen Rippe (34; 234) zu münden, die gegenüber dem jeweiligen Hohlraum liegt, sodass die Nuten (26.1, 26.2; 226.1, 226.2) es ermöglichen, Fluid aus mindestens einem stromaufwärts genannten Hohlraum, der der Innenseite des Anschlusses (2; 202) am nächsten liegt, und einem stromabwärts genannten Hohlraum, der der Außenseite (10) des Anschlusses (2; 202) am nächsten liegt, zu kanalisieren.

8. Anschluss (2; 102; 202) nach einem der vorstehenden Ansprüche, wobei die mindestens eine Abluftöffnung einen Durchlassquerschnitt zwischen 1mm² und 10mm² aufweist.

9. Anschluss (2; 102; 202) nach einem der vorstehenden Ansprüche, wobei der Behälter (23) im Allgemeinen die Form eines Zylinders mit kreisförmiger Basis aufweist.

10. Anschluss (2; 102; 202) nach einem der vorstehenden Ansprüche, weiter mindestens ein Anschlagorgan (20.1; 20.2) umfassend, das angeordnet ist, um einen jeweiligen Bördelring (31, 32; 131, 132; 231, 232) in Bördelposition zu arretieren.

11. Anschluss (2; 102; 202) nach einem der vorstehenden Ansprüche, zwei Anschlussorgane (21, 22; 121, 122; 221, 222) und zwei Bördelringe (31, 32; 131, 132; 231, 232) umfassend, wobei der Anschluss (2; 102; 202) weiter einen Zwischenkorpus (20; 120; 220) umfasst, der die Anschlussorgane (21, 22; 121, 122; 221, 222) fest miteinander verbindet.

12. Rohrsystem (1; 101; 201), beispielsweise für eine Luftzerlegungseinheit durch Kryotechnik, umfassend mindestens zwei Rohre (4, 5), wobei das Rohrsystem (1; 101; 201) **dadurch gekennzeichnet ist, dass** es weiter einen Anschluss (2; 102; 202) nach Anspruch 11 umfasst, wobei der Anschluss (2; 102; 202) an die mindestens zwei Rohre (4, 5) angeschlossen ist.

13. Rohrsystem (1; 101; 201) nach Anspruch 12, wobei sich der Anschluss (2; 102; 202) aus Material(ien) zusammensetzt, ausgewählt aus der Gruppe bestehend aus Kohlenstoffstahl, nichtrostendem Stahl und Aluminiumlegierung, und wobei sich die mindestens zwei Rohre (4, 5) aus Materialien zusammensetzen, ausgewählt aus der Gruppe bestehend aus Kohlenstoffstahl, nichtrostendem Stahl und Aluminiumlegierung, wobei die Materialien unterschiedlich sein können.

14. Verfahren zur Montage von mindestens einem Rohr (4, 5) an einem Anschluss (2; 102; 202) nach einem der Ansprüche 1 bis 11, beispielsweise für eine Luftzerlegungseinheit durch Kryotechnik, die folgenden Schritte umfassend:
- Einführen des mindestens einen Rohres (4, 5) in das mindestens eine Anschlussorgan (21, 22; 121, 122; 221, 222), und
- Verschieben des mindestens einen Bördelrings (31, 32; 131, 132; 231, 232) von der Einführposition in die Bördelposition, um den Anschluss (2; 102; 202) derart mit dem mindestens einen Rohr (4, 5) anzuschließen, dass die mindestens eine Abluftöffnung den mindestens einen Hohlraum (36.1, 36.2) fluidisch mit der Außenseite des Anschlusses (2; 102; 202) verbindet.

## Claims

1. A connector (2; 102; 202) adapted to be fluidly connected to at least one pipe (4, 5), for example in a cryogenic air separation unit, the connector (2; 102; 202) comprising:
- at least one connecting member (21, 22; 121, 122; 221, 222) having a generally tubular shape and having a receptacle (23) for receiving the pipe (4, 5), said connecting member (21, 22) comprising at least one generally ring-shaped rib (34; 134; 234), and
- at least one crimp ring (31, 32; 131, 132; 231, 232) arranged on said at least connecting member (21, 22) so as to be movable between an insertion position, wherein the tube (4, 5) can be introduced into said at least one receptacle (23), and a crimping position, wherein the crimp ring (31, 32) immobilizes the tube (4, 5) relative to a respective connecting member (21, 22) after deformation of said at least one rib (34; 134; 234), the connector (2; 102; 202) being **characterized in that** it has at least one exhaust port arranged so as to fluidically connect said at least one recess to the outside (10) of the connector (2; 102; 202) and **in that** the receptacle and the at least one rib make it possible to form the at least one recess (36.1, 36.2) between the connecting member (21, 22) and the pipe crimping position after deformation of said at least one rib upon use.

2. A connector (102; 202) according to claim 1, wherein said at least one exhaust port is formed by holes (118.1, 118.2, 218.1, 218.2) which coincide and which pass respectively through said at least one connecting member (121, 122; 221, 222) and said at least one crimp ring (131, 132; 231, 232) between said at least one recess (36.1, 36.2) and an outer surface (115) of said at least one crimp ring (131, 132; 231, 232).

3. A connector (2; 102; 202) according to claim 2, wherein said holes (118.1, 118.2; 218.1, 218.2) are straight, said holes (118.1, 118.2; 218.1, 218.2) extending preferably perpendicularly to the flow direction of a fluid in the corresponding connecting member (21, 22; 121, 122; 221, 222).

4. A connector (2; 102; 202) according to any one of the preceding claims, wherein a plurality of recesses (36.1, 36.24) are formed between the connecting member (21, 22; 121, 122; 221, 222) and the pipe (42) in crimping position, the connector (2; 102; 202) having a plurality of exhaust ports arranged so as to fluidically connect respectively at least one of the recesses to the outside (10) of the connector (2; 102; 202).

5. A connector (2; 202) according to any one of the preceding claims, wherein said at least one exhaust port is formed by at least one groove (26.1, 26.2; 226.1, 226.2) arranged to lead to a respective recess (36.1, 36.2) and on the side of the rib (34; 234) which is opposite to the respective recess, the or each groove extending preferably perpendicular to one or more ribs.

6. A connector (2; 202) according to claims 4 and 5, wherein the connector (2; 202) has at least two grooves (26.1, 26.2; 226.1, 226.2), the grooves (26.1, 26.2; 226.1, 226.2) being distributed around the corresponding connecting member (21, 22; 121, 122; 221, 222), preferably uniformly distributed.

7. A connector (2; 202) according to claim 5 or 6, wherein the or each connecting member (21, 22; 221, 222) comprises at least two ribs (34; 234), a plurality of recesses (36.1, 36.2) being formed near respective ribs (34; 234), each groove (26.1, 26.2; 226.1, 226.2) being arranged so as to open in a respective recess and on the side of the respective rib (34; 234) which is opposite to the respective recess, so that the grooves (26.1, 26.2; 226.1, 226.2) make it possible to channel fluid from said at least one upstream recess, which is the closest to the inside of the connector (2; 202) and one downstream recess, which is the closest to the outside (10) of the connector (2; 202).

8. A connector (2; 102; 202) according to any one of the preceding claims, wherein said at least one exhaust port has a flow section between 1 mm² and 10 mm².

9. A connector (2; 102; 202) according to any one of the preceding claims, wherein the receptacle (23) generally has the shape of a cylinder with a circular base.

10. A connector (2; 102; 202) according to any one of the preceding claims, further comprising at least one stop member (20.1; 20.2) arranged to stop a respective crimp ring (31, 32; 131, 132; 231, 232) in the crimping position.

11. A connector (2; 102; 202) according to any one of the preceding claims, comprising two connecting members (21, 22; 121, 122; 221, 222) and two crimp rings (31, 32; 131, 132; 231, 232), the connector (2; 102; 202) further comprising an intermediate body (20; 120; 220) rigidly connecting the connecting members (21, 22; 121, 122; 221, 222) to one another.

12. A pipe assembly (1; 101; 201), for example for a cryogenic air separation unit, comprising at least two pipes (4, 5), said pipe assembly (1; 101; 201) being **characterized in that** it further comprises a connector (2; 102; 202) according to claim 11, wherein said connector (2; 102; 202) is connected to said at least two pipes (4, 5).

13. A pipe assembly (1; 101; 201) according to claim 12, wherein the connector (2; 102; 202) is composed of material(s) selected from the group consisting of carbon steel, stainless steel and aluminum alloy, and wherein said at least two pipes (4, 5) are composed of materials selected from the group consisting of carbon steel, stainless steel and aluminum alloy; the materials may be different.

14. A method of assembling at least one pipe (4, 5) to a connector (2; 102; 202) according to any one of claims 1 to 11, for example for a cryogenic air separation unit, comprising the steps of:
- introducing said at least one pipe (4, 5) in said at least one connecting member (21, 22; 121, 122; 221, 222), and
- moving said at least one crimp ring (31, 32; 131, 132; 231, 232) from the insertion position to the crimping position so as to connect the connector (2; 102; 202) with said at least one pipe (4, 5), so that said at least one exhaust port fluidly connects said at least one recess (36.1, 36.2) on the outside of the connector (2; 102; 202).
